# EUROPÄISCHE PATENTSCHRIFT

(11) **EP 1 831 717 B1**
(45) Veröffentlichungstag und Bekanntmachung des Hinweises auf die Patenterteilung: **04.07.2012**
(21) Anmeldenummer: 05815609.2
(22) Anmeldetag: 22.11.2005
(51) Int. Cl.: G01S 7/481, G01S 17/93

(54) **OPTISCHER NAHBEREICHSSENSOR**
OPTICAL SHORT-RANGE SENSOR
DETECTEUR A ZONE D'ACTION IMMEDIATE OPTIQUE

(30) Priorität: 23.12.2004 DE 102004062022
(43) Veröffentlichungstag der Anmeldung: 12.09.2007
(73) Patentinhaber: ROBERT BOSCH GMBH, 70442 Stuttgart (DE)
(72) Erfinder: ZIMMERMANN, Uwe, 71686 Remseck (DE); WEILKES, Michael, 74343 Sachsenheim (DE); PRUKSCH, Achim, 74861 Neudenau (DE)
(86) Internationale Anmeldenummer: PCT/EP2005/056129
(87) Internationale Veröffentlichungsnummer: WO 2006/069857

(56) Entgegenhaltungen:
- EP-A- 1 162 478
- DE-A1- 3 844 340
- DE-A1- 10 146 808
- US-A- 5 463 384
- US-A- 6 038 496
- US-B1- 6 363 326

## Beschreibung

### Stand der Technik

Die Erfindung betrifft einen optischen Nahbereichssensor insbesondere für Kraftfahrzeug-Anwendungen. Zur Realisierung von Fahrerassistenzfunktionen sind Sensorsysteme bekannt, die sich für mehrere Funktionen eignen, z.B. eine 24 GHz-Puls-Radarsensorik zur Realisierung von Tote-Winkel-Detektion (BSD) und Parklückenvermessung (PLV).

Aus der US 5,463,384 ist ein System zur Kollisionsvermeidung bekannt, bei welchem Leuchtdioden während mehrerer Zyklen durch Zeitpulse angesteuert werden, wobei die Anzahl der Zyklen variabel ist.

Aus der US 5,636,326 B1 ist ein System bekannt, bei welchem eine Tote-Winkel-Detektion anhand von Pulsen mit vorgegebener Pulsfrequenz erfolgt.

Aus der DE 101 46 808 A1 ist ein System bekannt, bei welchem anhand von optischen Signalen sowie eine Laufzeitmessung Objekte in einem Beobachtungsbereich detektiert werden.

Aus der DE 38 44 340 A1 ist ein System zur Einparkhilfe bekannt, bei welchem ein optimaler Weg über akustische und optische Informationen an ein Fahrzeuglenker ausgegeben wird.

Aus der EP 1 162 478 A1 ist ein System bekannt, bei welchem zur Reichweitensteuerung die Amplitude ausgesandter Impulse variiert wird.

Die EP 0 479 273 A2 offenbart einen Laserradar zur Erzeugung eines pulsmodulierten Lichtstrahls, wobei die Entfernung zwischen dem Laserradar und einem Reflektor durch Messung der Laufzeit des reflektierten Lichtstrahls berechnet wird.

### Vorteile der Erfindung

Mit den Maßnahmen des Anspruchs 1, d.h. mit mehreren zeilenartig in einer Ebene angeordneten sequentiell insbesondere pulsförmig ansteuerbaren Sendeelementen, mindestens einem versetzt zu den sequentiell ansteuerbaren Sendeelementen angeordneten insbesondere nach unten strahlenden weiteren Sendeelement, einer Empfangseinrichtung zur gemeinsamen Auswertung von an Objekten reflektierten Signalen der Sendeelemente, insbesondere durch Laufzeitmessung, ist ein universell einsetzbarer Nahbereichssensor für verschiedene Fahrerassistenzfunktionen realisierbar. Der Sensor nach der Erfindung eignet sich gleichermaßen für die Funktionen Tote-Winkel-Detektion, Parklückenvermessung. Die insbesondere für die PLV wichtigen Kenngrößen wie Vorbeifahrabstand an geparkten Fahrzeugen, eine genaue Lokalisierung der Fahrzeugkanten, sowie eine Erkennung des Randsteines mit Vermessung des Vorbeifahrabstandes werden sicher erfasst. Derselbe Sensor kann an einem anderen Einbauort, z.B. im Frontbereich oder Heckbereich anstelle eines Seitenbereiches des Kraftfahrzeuges auch für andere Funktionen verwendet werden, z.B. Nahbereichsabdeckung, Fahrspurdetektion, Stauassistent, usw. Durch einen modularen Aufbau kann die Empfindlichkeit oder der verwendete Entfernungsbereich anwendungsspezifisch angepasst werden, z.B. durch Tausch des Moduls der Sendeelemente (Tausch von hochwertigen Sendeelemente wie Laserdioden gegen IREDs oder LEDs oder Kombination von hochwertigen Sendeelementen mit Sendeelementen geringerer optischer Leistung).

Die Steuerelektronik oder die Empfängseinrichümg kann dagegen für alle Anwendungen genutzt werden. Für die Steuerelektronik können auch Baugruppen für andere Sensoren/Sensorgruppen verwendet/mitverwendet werden, wie z.B. die Verzögerungs schaltung für SRR (Short Range Radar)-Sensoren. Die unterschiedlichen Sendeelemente können für den jeweiligen Anwendungsfall optimal aufeinander abgestimmt werden, Für die unterschiedlichen Anwendungen ist eine Variation der Lichtleitung der Sendeelemente durch Variation der Pulsbreite der Ansteuerimpulse vorgesehen .

Die weiteren Ansprüche zeigen vorteilhafte zusätzliche Ausgestaltungen auf.

### Zeichnungen

Anhand der Zeichnungen werden Ausfuhrungsbeispiele der Erfindung näher erläutert. Es. zeigen
Figur 1 eine Frontansicht eines erfindungsgemäßen Nahbereichssensors,
Figur 2 eine Draufsicht,
Figur 3 eine Seitenansicht,
Figur 4 ein Blockschaltbild des Sensors,
Figur 5 ein Detektionsfeld eines Sensors,
Figur 6 den Tausch eines Sendemoduls.

### Beschreibung von Ausführungsbeispielen

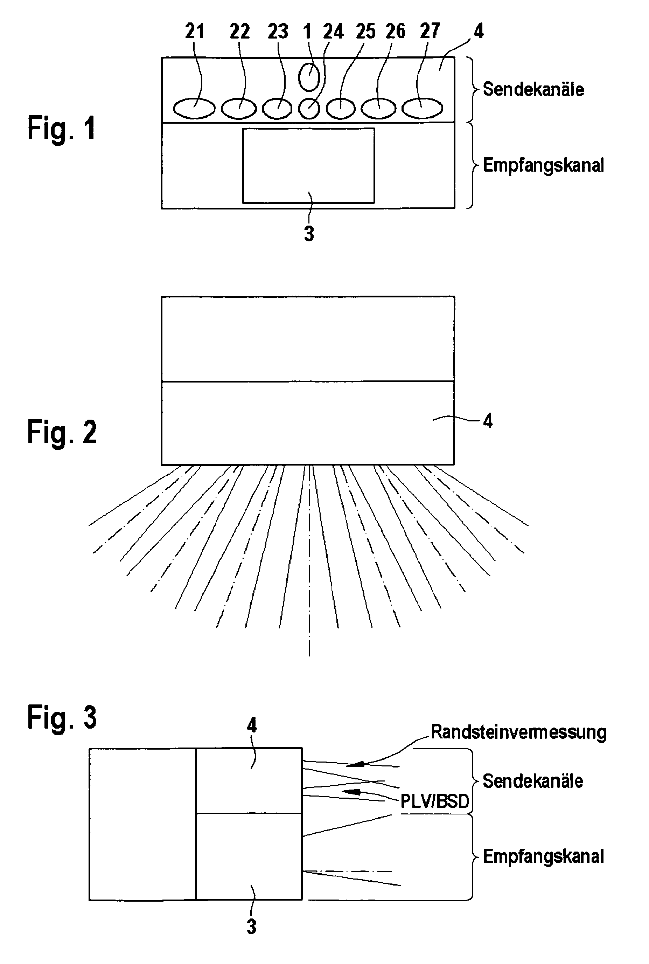

Das in den Figuren 1 bis 3 dargestellte Sensorkonzept basiert auf mehreren kostengünstigen optischen Sendeelementen 1, 21, 22, 23, ... 27, die mit Ausnahme des Sendeelementes 1 zeilenartig in einer Ebene angeordnet sind. Sie sind gegeneinander so versetzt, dass ihre Sendestrahlen fächerartig (Figur 2) einen weiten Winkelbereich ausleuchten. Auf der Mittelachse der zeilenartig angeordneten Sendeelemente 21 ...27 und zwar oberhalb letzterer in einer anderen Ebene befindet sich das weitere Sendeelement 1. Die zeilenweise angeordneten Sendeelemente 21...27 werden sequentiell mit insbesondere pulsförmigen Signalen angesteuert. Das weitere Sendeelement 1 kann ebenfalls mit pulsfönmigen Signalen angesteuert werden. Zur Detektion von Objekten mittels Laufzeitmessung wird eine Empfangseinrichtung 3 verwendet, deren Empfangsbereich den gesamten Sendebereich abdeckt (horizontal und vertikal). Die Empfangseinrichtung 3 befindet sich im unteren Bereich des Sensors. Es findet eine gemeinsame Auswertung der empfangenen Signale statt, d.h. aus den Korrelationen der empfangenen Signalen werden Auswertungen getroffen für unterschiedliche Anwendungen wie Tote-Winkel-Detektion BSD, Parklückenvermessung PLV, Stauerkennung, usw.

Die in Figur 1 gezeigte Sensorgeometrie ermöglicht eine winkelaufgelöste Abstandsmessung primär mittels der sieben Sendestrahlen in lateraler Richtung für BSD. Der mittlere Strahl des Sendeelements 24 wird neben der Tote-Winkel-Detektion auch zur Parklückenvermessung PLV verwendet. Die Randsteinerkennung oder Straßenrandmarkierung erfolgt primär mittels eines nach unten gerichteten Strahls des Sendeelements 1, dessen Strahlgeometrie an typische Vorbeifahrabstände angepasst ist. Bei geeignetem Einbau der optischen Systeme und aufgrund des relativ kurzen Messbereichs (<~14m) ist keine wesentliche Beeinträchtigung der Leistungsfähigkeit durch Verschmutzung und Gischt zu erwarten. Das System kann auch so ausgelegt werden, dass eine eventuelle Verschmutzung als solche detektiert wird.

Der Sendestrahl des Sendeelements 1 kann natürlich auch für andere Auswertungen mitbenutzt werden, beispielsweise als Redundanzelement zur Verifizierung weniger sicherer Detektionen.

Während für die sequentiell angesteuerten Sendestrahlen einfache Sendeelemente wie LEDs, Infrarot-Sendedioden (IREDs) verwendbar sind, wird für die Empfangseinrichtung 3 ein hochoptimierter Empfangskanal verwendet, da die Empfangselemente weniger kostengünstig sind als die Sendeelemente. Durch Verwendung von Silizium-PIN-Dioden anstatt von Avalanche-Photodioden (APD) kann beispielsweise die zum Betrieb der APD nötige Erzeugung von Hochspannung entfallen. Anstelle von IREDs können auch höherwertige Laserdioden LD verwendet werden, insbesondere für höhere Reichweiten.

Ein modularer Aufbau ermöglicht den Austausch des Sendemoduls je nach Reichweitenanforderung und Geometrieanforderung der Funktion. Es können Standardbauteile/-gruppen verwendet werden, z.B. neben den Sende- und Empfangselementen, optische Filter, Linsen, Auswerteelektronik. Durch Verwendung einer an LIDAR angepassten indirekten Laufzeitmessung, d.h. durch Koinzidenzauswertung eines an einem Objekt reflektierten mit einem entsprechend verzögerten Sendepuls (vgl. DE 199 63 005 A1) können wesentliche Konzepte des SRR (Short Range Radar)-Puls-Radars verwendet bzw. mitverwendet werden, wenn diese Baugruppen ebenfalls im Kraftfahrzeug verbaut sind.

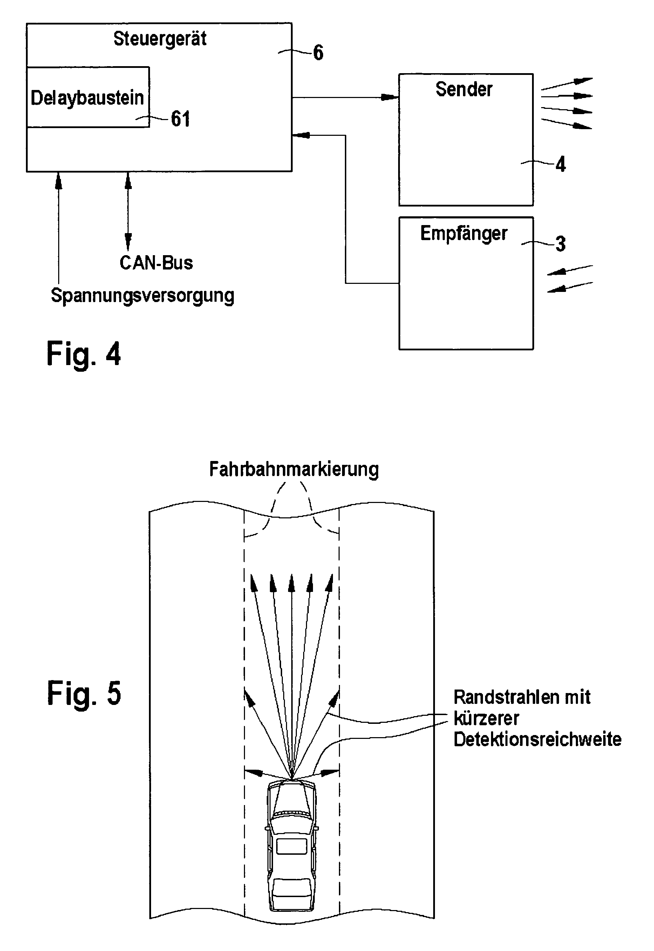

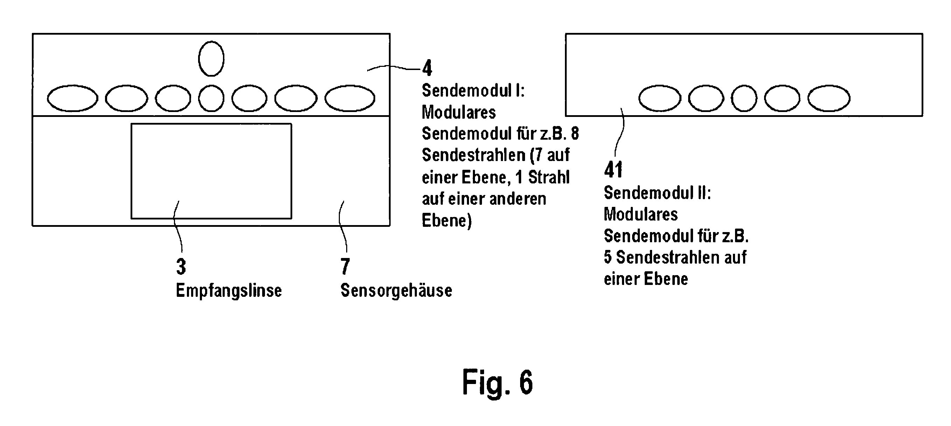

Figur 4 zeigt ein Blockschaltbild eines erfindungsgemäßen modular aufgebauten Sensors und Figur 6 die Unterbringung in einem Gehäuse 7. Sendemodul 4, Empfangseinheit 3 und Steuereinheit 6 sind in einem gemeinsamen Gehäuse 7 untergebracht. Je nach gewünschter Funktion kann das Sendemodul 4 gegen ein anderes 41 ausgetauscht werden, ohne dass Änderungen am Gehäuse notwendig sind.

In Figur 4 ist in der Steuereinheit 6 die Baugruppe 61 für die Verzögerung des Sendesignals aus der SRR-Radartechnik integriert.

In Figur 5 ist ein Detektionsfeld mit neun Einzelstrahlen für einen erfindungsgemäßen Sensor dargestellt. Die Randstrahlen besitzen eine deutlich kürzere Reichweiten als die Mittelstrahlen. Für dieses Szenario können beispielsweise für die Mittelstrahlen Laserdioden als Sendeelemente verwendet werden und für die Randstrahlen einfache LEDs oder IREDs. Ein Vorteil von kürzerer Reichweite der Randstrahlen ist, dass nicht relevante Objekte wie z.B. Randbebauung am Straßenrand, nicht detektiert wird, was insbesondere Vorteile für die Signalauswertung und -verarbeitung bringt. Eine einfache Skalierbarkeit wird durch die Modularität des Senderaufbaus erreicht.

Bei den im Straßenverkehr vorkommenden Reflektoren überstreicht der Dynamikbereich zu erfassender Nutzlichtintensitäten ca. 8 Zehnerpotenzen. Dieser Dynamikbereieh kann z.B. auf Empfängemite, durch Umschaltung z.B. unterschiedlicher Verstärkerstufen realisiert werden, auf der Senderseite einerseits durch Beeinflussung der Lichtintensität z.B. einer IRED mittels des durchflossenen Stromes, andererseits durch Variation der Pulsbreite eines laufzeitmessenden optischen Systems. Erfindungsgemäß ist die Sendeleistung durch Veränderung der Pulsdauer der Sendepulse zu variieren. Die Variation der Pulsbreite ist kostengünstiger realisierbar als eine Stromregelung der Sendebauelemente. Verstärkungs- und Dämpfungsstufen im Empfangssignalpfad können unter Umständen ganz entfallen. Vorteil: Der Abstand von Objekten mit hoher Intensität wird automatisch genauer vermessen, da zur Reduktion der Lichtleistung die Pulsdauer verringert wird. D.h. nahe, im Normälfall stärker reflektierende Objekte werden genauer vermessen als weiter entfernte. Dies ist kompatibel mit einer zumeist geforderten relativen Meßgenauigkeit bezogen auf den Abstand. Wird eine IRED oder Laserdiode LD pulsförmig angesteuert, wobei die Default-Pulsbreite einem spezifizierten Wert entspricht, so wird durch die Verkürzung/Verlängerung der Pulsbreite die ausgesendete Lichtintensität innerhalb gewisser Grenzen verringert/erhöht . Gleichseitig wird bei einem laufzeitmessenden optischen Messsystem durch Veränderung der Pulsbreite die Genauigkeit der Entfernungsbestimmung geändert. Dies beruht darauf, dass die Pulsbreite direkt das Trennvermögen beeinftusst: Kurze Pulse ergeben Pulse mit schmalen Halbwertsbreiten, lange Pulse führen zu größeren Halbwertsbreiten. Die Peaklagen schmaler Pulse können genauer bestimmt werden als die breiter Pulse. Die Variation der Pulsbreite kann auch dazu benutzt werden beim Tausch von Sendeelementen verschiedener Empfindlichkeit eine Anpassung an die gewünschte Funktion vorzunehmen.

## Patentansprüche

1. Optischer Nahbereichssensor insbesondere für Kraftfahrzeug-Anwendungen mit folgenden Merkmalen:
- mehreren zeilenartig in einer Ebene angeordneten sequentiell insbesondere pulsförmig ansteuerbaren Sendeelementen (21...27),
- mindestens einem versetzt zu den sequentiell ansteuerbaren Sendeelementen angeordneten insbesondere nach unten strahlenden weiteren Sendeelement (1),
**gekennzeichnet durch**
- eine Empfangseinrichtung (3) zur gemeinsamen Auswertung von an Objekten reflektierten Signalen der Sendeelemente **durch** Laufzeitmessung, wobei anhand einer Variation der Pulsbreite der Ansteuerpulse Einfluss auf die Lichtleistung der Sendeelemente (1, 21...27) und die Genauigkeit der Entfernungsbestimmung genommen wird, derart dass bei Objekten mit hoher Intensität die Pulsdauer der Sendepulse verringert wird.

2. Nahbereichssensor nach Anspruch 1, **dadurch gekennzeichnet, dass** die Sendeelemente (1, 21...27) in einem austauschbaren Modul (4) angeordnet sind, welches zusammen mit der Empfangseinrichtung (3)'in einem gemeinsamen Gehäuse (7) untergebracht ist.

3. Nahbereichsensor nach einem der Ansprüche 1 oder 2, **dadurch gekennzeichnet, dass** die zeilenartig angeordneten Sendeelemente (21...27) gegeneinander so versetzt sind, dass ihre Sendestrahlen fächerartig einen weiten Winkelbereich ausleuchten.

4. Nahbereichssensor nach einem der Ansprüche 1 bis 3, **dadurch gekennzeichnet, dass** das weitere Sendeelement (1) auf der Mittelachse der zeilenartig angeordneten Sendeelemente insbesondere oberhalb letzterer angeordnet ist.

5. Nahbereichssensor nach einem der Ansprüche 1 bis 4, **dadurch gekennzeichnet, dass** das/die mittlere/n (24) der zeilenartig angeordneten Sendeelemente (21...27) primär zur Parklückenvermessung vorgesehen ist/sind.

6. Nahbereichssensors nach einem der Ansprüche 1 bis 5, **dadurch gekennzeichnet, dass** das weitere Sendeelement (1) primär zur Randsteinerkennung vorgesehen ist.

7. Nahbereichssensor nach einem der Ansprüche 1 bis 6, **dadurch gekennzeichnet, dass** die zeilenartig angeordneten Sendeelemente (1) primär zur Tote-Winkel-Detektion vorgesehen sind.

8. Nahbereichssensor nach einem der Ansprüche 1 bis 7, **dadurch gekennzeichnet, dass** als optische Sendeelemente LEDs, Laserdioden oder Infrarot-Sendedioden vorgesehen sind, die je nach Reichweite durch Modultausch einsetzbar sind.

9. Nahbereichssensor nach einem der Ansprüche 1 bis 8, **dadurch gekennzeichnet, dass** als Empfangselement/e PIN-Dioden oder Avalanche-Photodioden vorgesehen sind.

10. Nahbereichssensor nach einem der Ansprüche 1 bis 9, **dadurch gekennzeichnet, dass** für die Ansteuerung der Sendeelemente und/oder Auswertung durch Empfangselemente eine gemeinsame Steuerelektronik vorgesehen ist, die zumindest teilweise auf Baugruppen basiert, die für andere Sensoren oder Sensorgruppen im Kraftfahrzeug vorgesehen sind, wie z.B. die Verzögerungsschaltung für einen SRR (Short Range Radar)-Sensor für Koinzidenzauswertung.

11. Nahbereichssensor nach einem der Ansprüche 1 bis 10, **dadurch gekennzeichnet, dass** eine Detektion der Verschmutzung der Sendeelemente und/oder des Empfangselements/ der Empfangselemente vorgesehen ist.

## Claims

1. Optical short-range sensor, in particular for motor vehicle applications, having the following features:
- a plurality of transmission elements (21...27) which are arranged in a row-like manner in a plane and can be sequentially driven, in particular in a pulsed manner,
- at least one further transmission element (1) which is arranged with an offset with respect to the sequentially drivable transmission elements and radiates downwards, in particular, **characterized by**
- a receiving device (3) for jointly evaluating signals from the transmission elements, which are reflected at objects, by means of propagation time measurement, the light output of the transmission elements (1, 21...27) and the accuracy of the distance determination being influenced by a variation in the pulse width of the drive pulses in such a manner that the pulse duration of the transmission pulses is reduced in the case of high-intensity objects.

2. Short-range sensor according to Claim 1, **characterized in that** the transmission elements (1, 21...27) are arranged in an exchangeable module (4) which is accommodated, together with the receiving device (3), in a common housing (7).

3. Short-range sensor according to either of Claims 1 and 2, **characterized in that** the transmission elements (21...27) arranged in a row-like manner and are offset with respect to one another in such a manner that their transmission beams illuminate a wide angular range in a fan-like manner.

4. Short-range sensor according to one of Claims 1 to 3, **characterized in that** the further transmission element (1) is arranged on the central axis of the transmission elements arranged in a row-like manner, in particular above the latter.

5. Short-range sensor according to one of Claims 1 to 4, **characterized in that** the central element(s) (24) of the transmission elements (21...27) arranged in a row-like manner is/are primarily intended to measure parking spaces.

6. Short-range sensor according to one of Claims 1 to 5, **characterized in that** the further transmission element (1) is primarily intended to detect kerbs.

7. Short-range sensor according to one of Claims 1 to 6, **characterized in that** the transmission elements (1) arranged in a row-like manner are primarily intended to detect blind spots.

8. Short-range sensor according to one of Claims 1 to 7, **characterized in that** LEDs, laser diodes or infrared transmission diodes are provided as optical transmission elements and, depending on the range, can be used by exchanging the module.

9. Short-range sensor according to one of Claims 1 to 8, **characterized in that** PIN diodes or avalanche photodiodes are provided as receiving element(s).

10. Short-range sensor according to one of Claims 1 to 9, **characterized in that** common control electronics are provided for the purpose of driving the transmission elements and/or for evaluation by receiving elements, which control electronics are at least partially based on subassemblies which are provided for other sensors or sensor groups in the motor vehicle, for example the delay circuit for an SRR (short range radar) sensor for coincidence evaluation.

11. Short-range sensor according to one of Claims 1 to 10, **characterized in that** the contamination of the transmission elements and/or of the receiving element(s) is detected.

## Revendications

1. Détecteur à zone d'action immédiate optique, notamment pour des applications dans les véhicules automobiles, présentant les caractéristiques suivantes :
plusieurs éléments émetteurs (21...27) disposés en ligne dans un plan pouvant être commandés de façon séquentielle, notamment pulsée ;
au moins un élément émetteur (1) supplémentaire rayonnant notamment vers le bas disposé de façon décalée par rapport aux éléments émetteurs commandables de façon séquentielle ;
**caractérisé par** la présence d'un dispositif de réception (3) servant à analyser en commun les signaux des éléments émetteurs réfléchis contre les objets par mesure du temps écoulé, l'influence sur la puissance lumineuse des éléments émetteurs (1, 21...27) et la précision de la détermination de l'éloignement étant déterminée à l'aide d'une variation de la largeur d'impulsion des impulsions de commande, de telle sorte qu'en présence d'objets présentant une intensité élevée, la durée d'impulsion des impulsions émettrices est réduite.

2. Détecteur à zone d'action immédiate selon la revendication 1, **caractérisé en ce que** les éléments émetteurs (1, 21...27) sont disposés dans un module (4) échangeable pouvant être logé, conjointement avec le dispositif de réception (3), dans un boîtier (7) commun.

3. Détecteur à zone d'action immédiate selon l'une quelconque des revendications 1 ou 2, **caractérisé en ce que** les éléments émetteurs (21...27) disposés en ligne sont décalés les uns par rapport aux autres de telle sorte que leurs faisceaux émetteurs éclairent une large zone angulaire à la façon d'un éventail.

4. Détecteur à zone d'action immédiate selon l'une quelconque des revendications 1 à 3, **caractérisé en ce que** l'élément émetteur (1) supplémentaire est disposé sur l'axe central des éléments émetteurs disposés en ligne, notamment au-dessus de ces derniers.

5. Détecteur à zone d'action immédiate selon l'une quelconque des revendications 1 à 4, **caractérisé en ce que** le ou les éléments émetteurs (21...27) disposés en ligne placés au centre (24) sont principalement prévus pour mesurer l'espace de stationnement restant.

6. Détecteur à zone d'action immédiate selon l'une quelconque des revendications 1 à 5, **caractérisé en ce que** l'élément émetteur (1) supplémentaire est principalement prévu pour détecter les bordures de trottoir.

7. Détecteur à zone d'action immédiate selon l'une quelconque des revendications 1 à 6, **caractérisé en ce que** les éléments émetteurs (1) disposés en ligne sont principalement prévus pour détecter l'angle mort.

8. Détecteur à zone d'action immédiate selon l'une quelconque des revendications 1 à 7, **caractérisé en ce que** les éléments émetteurs optiques sont des DEL, des diodes laser ou des diodes à infrarouge pouvant être utilisés en fonction de la portée nécessaire en changeant le module.

9. Détecteur à zone d'action immédiate selon l'une quelconque des revendications 1 à 8, **caractérisé en ce que** le ou les éléments récepteurs sont des diodes PIN ou des photodiodes à avalanche.

10. Détecteur à zone d'action immédiate selon l'une quelconque des revendications 1 à 9, **caractérisé en ce que** pour commander les éléments émetteurs et/ou réaliser une analyse à l'aide des éléments récepteurs, on utilise, pour réaliser des analyses de coïncidence, un système électronique de commande commun se basant au moins en partie sur des modules prévus pour d'autres détecteurs ou groupes de détecteurs dans le véhicule automobile, tel le circuit de retardement prévu pour un détecteur SRR (radar courte portée).

11. Détecteur à zone d'action immédiate selon l'une quelconque des revendications 1 à 10, **caractérisé en ce qu'**une détection de l'encrassement des éléments émetteurs et/ou du ou des éléments récepteurs est prévue.
